# EUROPEAN PATENT SPECIFICATION

(11) **EP 2 083 204 B1**
(45) Date of publication and mention of the grant of the patent: **07.12.2011**
(21) Application number: 08001392.3
(22) Date of filing: 25.01.2008
(51) Int. Cl.: F16L 27/093, F16J 15/12

(54) **Hydraulic coupling**
Hydraulische Kupplung
Raccord hydraulique

(43) Date of publication of application: 29.07.2009
(73) Proprietor: GM Global Technology Operations LLC, Detroit, MI 48265-3000 (US)
(72) Inventor: Svensson, Jenny, 118 25 Stockholm (SE)
(74) Representative: Strauss, Peter

(56) References cited:
- EP-A- 0 251 516
- EP-A- 0 339 364
- EP-A- 1 843 072
- DE-A1- 3 802 090
- DE-U1- 29 715 844
- GB-A- 883 464
- US-A- 3 124 366
- US-A- 5 407 214

## Description

The invention relates to a hydraulic coupling sealing member for a hydraulic coupling, in particular, a banjo-type hydraulic coupling.

Banjo-type hydraulic couplings may be used in brake systems and cooling systems of automobiles, for example, and are used when it is desired to supply fluid to a component through a 90° change of direction or other reorientation of the fluid flow.

Banjo-type hydraulic couplings are so termed because of their shape. A banjo-type hydraulic coupling typically comprises a ring shaped body and a tube connected to an outer side face of the ring shaped body which is in flow communication with the opening of the ring giving rise to a substantially banjoshaped assembly.

A banjo-type hydraulic coupling also comprises a bolt with a hollow base portion and at least one radial fluid port. When the bolt is positioned in the through opening of the ring, the radial fluid port is in flow communication with the tube of the body thus allowing fluid entering the tube to be reorientated by 90° and flow out of the base of the bolt. In order to seal the body and bolt assembly, a washer is positioned on either side of the body and a specified torque applied to the assembly to provide the seal.

Banjo-type couplings have the advantage that they are simple to assemble. Furthermore, they can be assembled from the front so that assembly can be affected with power tools. However, leaks in the coupling may still occur.

A Banjo-type hydraulic coupling with two sealing members made of a metal ring with annuli of rubber is disclosed in GB 883,464 A.

In order to minimise potential leaks, it is known to improve the surface finish and provide tighter tolerances in the manufacture of the couplings. It is also known to use materials of a high tensile strength in order that higher torques can be applied in order to obtain the seal. However, further improvements to banjo-type hydraulic couplings are desired in order to further reduce the likelihood of leaks.

It is, therefore, an object of the invention to provide a hydraulic coupling with a sealing member for a hydraulic coupling which provides a reliable seal and which can be cost-effectively manufactured.

This object is solved by subject matter of the independent claim. Further improvements are the subject matter of the dependent claims.

According to the invention, a hydraulic coupling comprises a body, a bolt and at least one annular sealing member. The body comprises an opening which extends through the body and a fluid passageway that intersects with and is in fluid communication with the opening. The bolt is adapted to be received in the opening through the body and comprises a base portion, an axial fluid passageway within the base portion which is open at one end and at least one radial fluid port in fluid communication with the axial fluid passageway. When the bolt is received in the opening though the body, the radial fluid port in the bolt is in fluid communication with the fluid passageway in the body. The at least one annular sealing member is adapted to be arranged between the bolt and the body. The sealing member comprises a plastically deformable core comprising a first major surface, a second major surface opposing the first major surface and an inner annular portion protruding inwardly from an inner side face of the plastically deformable core. A first rubber layer is positioned on the first major surface of the annular sealing member and a second rubber layer is positioned on the second major surface of the annular sealing member. The inner annular portion of the annular sealing member comprises rubber and the inner diameter of the inner annular member is selected such that the sealing member is detachedly maintainable on the bolt by axial compression.

According to the invention, the outer major surfaces of the annular sealing member each comprise a layer of rubber. The rubber may be fixedly attached to the plastically deformable core of the annular sealing member. The rubber may be attached to the core by adhesive, for example. The major surfaces of the annular sealing member are in contact with the bolt or the body or the body and the port to which the coupling is fastened when the coupling is assembled and in use.

The annular sealing member further comprises an inner annular portion which also comprises rubber and which provides the captive surface of the seal. Therefore, the outer major surfaces as well as the inner captive surface comprise a elastically deformable material in the form of rubber which is supported by a core of a plastically deformable material. The plastically deformable material may also be elastically deformable to a degree.

The combination of the rubber outer major surfaces and rubber inner annular portion provides a hydraulic coupling which is less prone to leaks.

In an embodiment, the outer side face of the plastically deformable core remains free of rubber and in a further embodiment, the inner side face of the plastically deformable core adjacent the inner annular portion of the annular sealing member remains free of rubber.

The above embodiments in which the outer side face of the plastically deformable core and/or the inner side face of the plastically deformable core adjacent the inner annular portion remains free of rubber have the advantage that the annular sealing member can be manufactured by the following simple method.

The sealing member may be manufactured by providing a sheet of the plastically deformable core material and attaching a rubber coating on each of the two major surfaces of the sheet thus forming a laminate. The annular member may then be stamped from this laminate and a ring-shaped rubber portion attached to the inner side face of the ring to provide the inner annular portion of the sealing member.

In an alternative embodiment, all of the outer surfaces of the plastically deformable core are coated in rubber.

An outer surface of the base portion of the bolt may comprise a threaded portion. This enables the bolt and, therefore, the hydraulic coupling to be attached to a threaded port. The annular sealing member is compressed between the head of the bolt and the body or between the body and the port to which the coupling is fastened by applying torque to the head of the bolt.

The inner diameter of the inner annular member is selected such that the annular sealing member is detachedly maintainable on the bolt by axial compression. The inner diameter of the inner annular member is, therefore, slightly smaller than the outer diameter of the bolt of the hydraulic coupling. In order to place the annular sealing member on the bolt, the rubber of the inner annular portion is elastically deformed so that the sealing member is detachedly maintainable on the bolt by axial compression of at least the rubber inner annular portion.

The plastically deformable core may comprise plastic, metal or an alloy. In particular embodiments of the invention, the plastically deformable core comprises steel or aluminium.

The type of rubber used may depend on the application in which the hydraulic coupling is to be used. For cooling systems including water, the rubber may be one of ethylene propylene diene monomer rubber (EPDM), or hydrogenated nitrile butadiene rubber (HNBR) or nitrile-butadiene rubber (NBR). For brake systems including oil, the rubber may be a fluorocarbon rubber such as FKM or FPM.

The hydraulic coupling may include two sealing members which are substantially the same. In use, one sealing member is positioned on the bolt on each side of the body. Therefore, one sealing member is positioned between the head of the bolt and the body and the second sealing member is positioned between the body and the port to which the coupling is attached.

Embodiments will now be explained with reference to the accompanying drawings.
- Figure 1: illustrates a side view of a banjo-type hydraulic coupling according to the invention,
- Figure 2: illustrates a partial cross-sectional view of the hydraulic coupling of figure 1,
- Figure 3: illustrates a plan view of the body of the hydraulic coupling of figures 1 and 2,
- Figure 4: illustrates a cross-sectional view of the sealing member of the hydraulic coupling of figures 1 to 3.

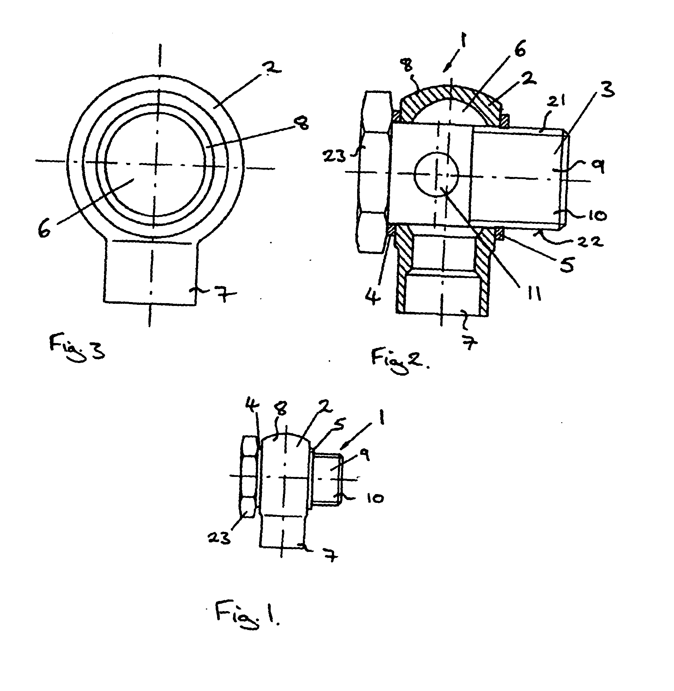

Figures 1 to 3 illustrate an assembled a banjo-type hydraulic coupling 1 according to the invention. The hydraulic coupling 1 comprises a body 2, a bolt 3 and two annular sealing members 4, 5.

Figure 1 illustrates a side view of the assembled hydraulic coupling 1 and figure 2 illustrates a partial cross-sectional side view of the assembled hydraulic coupling 1 of figure 1. A plan view of the body 2 of the hydraulic coupling 1 is illustrated in figure 3.

The body 2 comprises an opening 6 which extends through the body 2 and a fluid passageway 7 which intersects with and is in fluid communication with the opening 6. From the plan view of figure 3, it can be seen that in the body has a substantially cylindrical portion 8 through which the opening 6 extends and that the fluid passageway 7 extends from an outer side face of the cylindrical portion 8. The longitudinal axis of the fluid passageway 7 lies at approximately 90° to the longitudinal axis of the opening 6 of the body 2 in this embodiment.

The bolt 3 of the hydraulic coupling 1 is adapted to be received in the opening 6 of the body 2. The outer diameter of the bolt 3 is slightly smaller than the inner diameter of the opening 6 of the body 2. The bolt has a base portion 9 and a head portion 23 which is laterally larger than the base portion 9 and which has a generally hexagonal shape. The bolt 3 further comprises an axial fluid passageway 10 within the base portion 9 which is open at the distal end of the base portion 9.

The bolt further comprises a plurality of radial fluid ports 11, of which one is illustrated in the cross-sectional view of figure 2, which are in flow communication with the axial fluid passageway 10 of the base portion 9. The radial fluid ports 11 extend in a direction which lies at approximately 90° to the axis of the fluid passageway 10 of the bolt.

The hydraulic coupling 1 is assembled so that one of the annular sealing members 4, 5 is positioned on either side of the body 2 and so that the bolt 3 is received in the opening 6 of the body 2. Therefore, one sealing member 4 is positioned between the head portion 23 of the bolt 3 and the body 2 and the second sealing member 5 is positioned on the opposing side of the body 2. The bolt 3 extends generally transversely to the fluid passageway 7 of the body 2.

When assembled the radial fluid ports 11 of the bolt 3 are in flow communication with the passageway 7 of the body 2. Therefore, a fluid entering the passageway 7 is redirected through 90° by flowing through the radial fluid ports 11 and axial passageway 9 of the bolt 3. The fluid may also flow through the coupling in the reverse direction.

The annular sealing members 4, 5 each have an inner diameter which is slightly smaller than the outer diameter of the bolt 3. Therefore, the annular sealing members 4, 5 are detachedly maintained on the bolt 3 by axial compression.

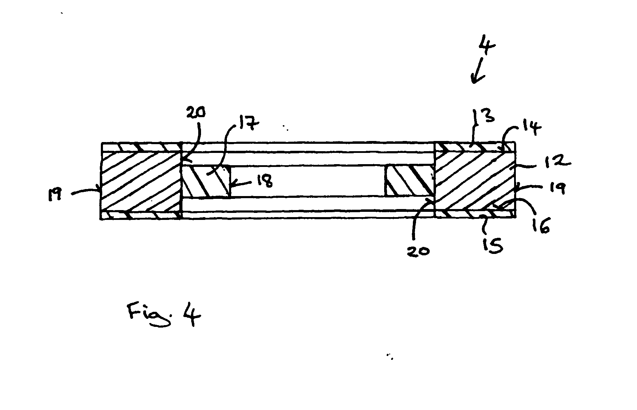

The annular sealing members 4, 5 are subtantially identical and one is illustrated in more detail in figure 4. Each annular sealing member 4, 5 comprises a ring shaped plastically deformable core 12 of aluminium. A first layer 13 of rubber is positioned on, and fixedly attached to, the first major surface 14 of the aluminium core 12 and a second layer of rubber 15 is positioned on, and fixedly attached to, the second major surface 16 of the aluminium core 12.

The annular sealing member 4, 5 can be thought of as a laminated washer comprising a layer of rubber on the major surfaces. The rubber layers 13, 15 are elastically deformable and provide a seal against fluid leaks when the respective layer is compressed between the head portion 23 of the bolt 3 and the body 2 and between the body 2 and a non-illustrated ports.

The annular sealing member 4, 5 further comprises an inner annular portion 17 which protrudes inwardly from approximately the centre of the inner side face 18 of the aluminium core 12. The inner annular portion 17 provides a captive surface since the diameter of the inner annular portion 17 is slightly smaller than the outer diameter of the bolt 3. The inner annular portion 17 comprises rubber which is elastically deformable so that the annular sealing member 4, 5 may be detachedly maintained on the bolt 3 by axial compression of the annular sealing member 4, in particular, by axial compression of the inner annular portion 17.

The rubber as well as the material of the core is selected for the application in which it is intended that the hydraulic coupling 1 will be used. If the hydraulic coupling is to be used in a water cooling system, the rubber coatings 13, 15 as well as the inner annular portion 17 may be ethylene propylene diene monomer rubber (EPDM). If the hydraulic coupling 1 is to be used in an automobile brake system, a rubber suitable for use with brake oil may be used, for example a fluorocarbon rubber such as FKM.

The outer side faces 19 of the core 12 as well as the inner side faces 20 of the core 12 positioned adjacent the inner annular portion 17 are exposed and remained free from rubber in this embodiment. In a further embodiment is not illustrated in the figures, these surfaces are also provided with a layer of rubber.

To use the hydraulic coupling 1, the first sealing member 4 is placed on the base portion 9 of the bolt 9, the bolt 3 is placed in the body 2 and the second sealing member 5 placed on the distal end of the bolt 3 so as to be positioned on the opposing side of the body 2.

The distal end of the base portion 9 of the bolt 3 comprises a thread 21 in its outer surface 22. The bolt 3 and, therefore, the hydraulic coupling 1 is attached to a non-illustrated threaded port having a matching thread by applying a torque to the head 23 of the bolt 3.

The elastically deformable rubber coating 13, 15 of the annular sealing member 4, 5 is compressed between the plastically deformable core 12 of the annular sealing member 4, 5 and the adjacent surface of the head 23 of the bolt 3 and the body 2 and between the body 2 and non-illustrated port, respectively. At the same time, the elastically deformable rubber inner annular portion 17 is compressed against the outer surface 22 of the bolt 3. The combination of the inner rubber annular portion 17 and the rubber coating 13, 15 of the major surfaces provides a reliable seal preventing leaks of the fluid flowing though the hydraulic coupling 1. In use the fluid flows into passageway 7 and flows out of the distal end of the bolt 3 thus being redirected by approximately 90°.

The annular sealing member 4 may have an overall thickness of 1 mm and the inner annular portion may have a thickness of 0.3 mm when the outer diameter of the sealing member 4 is 22 mm, the inner diameter of the core 12 is 14 mm and the inner diameter of the inner annular portion 17 is 13 mm.

The sealing member may be manufactured by the following method. Firstly, a sheet of aluminium is provided and the two major surfaces of the sheet coated with rubber. A plurality of intermediate annular forms may be stamped from the coated sheet, each comprising an aluminium core 12 with a layer of rubber 13, 15 on its major surfaces. The outer side face 19 and inner side face 20 of the aluminium core 12 is free from rubber.

A rubber annular member having an outer diameter approximately the same as the inner diameter of the aluminium core is provided and then attached to the inner side face of the aluminium core in approximately the centre of the inner side face. The rubber annular portion 17 of the annular sealing member 4 provides a captive surface of the annular sealing member 4.

The rubber may be fixedly attached to the plastically deformable core 12 of the annular sealing member 4, 5 by a layer of adhesive or by directly fixing the rubber to the core 12.

### Reference numbers

- 1: hydraulic coupling
- 2: body
- 3: bolt
- 4: first annular sealing member
- 5: second annular sealing member
- 6: opening
- 7: fluid passageway
- 8: cylindrical portion of body
- 9: base portion of bolt
- 10: axial fluid passageway of bolt
- 11: radial fluid passageway of bolt
- 12: aluminium core
- 13: first layer of rubber
- 14: first major surface
- 15: second layer of rubber
- 16: second major surface
- 17: inner annular portion
- 18: inner side face of core
- 19: outer side face of core
- 20: inner side face of core
- 21: thread
- 22: outer surface
- 23: head portion of bolt

## Claims

1. Hydraulic coupling (1), comprising:
- a body (2) comprising an opening (6) extending through the body (2) and a fluid passageway (7) that intersects with and is in fluid communication with the opening (6),
- a bolt (3) adapted to be received in the opening (6) through the body (2), the bolt (3) comprising a base portion (9), an axial fluid passageway (10) within the base portion (9) open at one end and at least one radial fluid port (11) in fluid communication with the axial fluid passageway (10), wherein when the bolt (3) is received in the opening (6) though the body (2), the radial fluid port (11) of the bolt (3) is in fluid communication with the fluid passageway (7) of the body (2),
- at least one annular sealing member (4, 5) adapted to be arranged between the bolt (3) and the body (2), wherein the sealing member (4, 5) comprises a plastically deformable core (12) comprising a first major surface (14), a second major surface (16) opposing the first major surface (14) and an inner annular portion (17) protruding inwardly from an inner side face (18) of the plastically deformable core (12),
**characterized in that**
a first rubber layer (13) is positioned on the first major surface (14), a second rubber layer (15) is positioned on the second major surface (16), the inner annular portion (17) comprises rubber and the inner diameter of the inner annular member (17) is selected such that the sealing member (4, 5) is detachedly maintainable on the bolt (3) by axial compression.

2. Hydraulic coupling (1) according to claim 1,
**characterized in that**
the outer side face (20) of the plastically deformable (12) core remains free of rubber.

3. Hydraulic coupling (1) according to claim 1 or claim 2,
**characterized in that**
the inner side face (20) of the plastically deformable core (12) adjacent the inner annular portion (17) remains free of rubber.

4. Hydraulic coupling (1) according to claim 1,
**characterized in that**
the outer side face (19) and the inner side face (20) of the plastically deformable core (12) adjacent the inner annular portion (17) comprise a rubber coating.

5. Hydraulic coupling (1) according to one of claims 1 to 4,
**characterized in that**
the plastically deformable core (12) comprises plastic.

6. Hydraulic coupling (1) according to one of claims 1 to 4,
**characterized in that**
the plastically deformable core (12) comprises a metal or an alloy.

7. Hydraulic coupling (1) according to claim 6,
**characterized in that**
the plastically deformable core (12) comprises steel or aluminium.

8. Hydraulic coupling (1) according to one of claims 1 to 7,
**characterized in that**
the rubber is fluorocarbon rubber.

9. Hydraulic coupling (1) according to one of claims 1 to 8,
**characterized in that**
the rubber is ethylene propylene diene monomer rubber, or hydrogenated nitrile butadiene rubber or nitrile-butadiene rubber.

10. Hydraulic coupling (1) according to one of claims 1 to 9,
**characterized in that**
a sealing member (4, 5) is arranged on opposing sides of the body (2).

11. Hydraulic coupling (1) according to one of claims 1 to 10,
**characterized in that**
the hydraulic coupling (1) is a banjo-type hydraulic coupling.

## Patentansprüche

1. Hydraulische Kupplung (1), umfassend:
- einen Körper (2) mit einer Öffnung (6), die sich durch den Körper (2) erstreckt, und einem Fluiddurchlass (7), der sich mit der Öffnung (6) kreuzt und in Fluidverbindung mit ihr steht,
- einen Bolzen (3), der geeignet ist, in der Öffnung (6) durch den Körper (2) aufgenommen zu werden, wobei der Bolzen (3) umfasst: einen Basisteil (9), einen axialen Fluiddurchlass (10) im Basisteil (9), der an einem Ende offen ist, und mindestens eine radiale Fluidöffnung (11) in Fluidverbindung mit dem axialen Fluiddurchlass (10), wobei, wenn der Bolzen (3) in der Öffnung (6) durch den Körper (2) untergebracht ist, die radiale Fluidöffnung (11) des Bolzens (3) in Fluidverbindung mit dem Fluiddurchlass (7) des Körpers (2) steht,
- mindestens ein ringförmiges Dichtelement (4, 5), das geeignet ist, zwischen dem Bolzen (3) und dem Körper (2) angeordnet zu werden, wobei das Dichtelement (4, 5) einen plastisch verformbaren Kern (12) umfasst, der Folgendes umfasst: eine erste Hauptfläche (14), eine zweite Hauptfläche (16), die der ersten Hauptfläche (14) gegenüberliegt, und einen inneren ringförmigen Teil (17), der von einer inneren Seitenfläche (18) des plastisch verformbaren Kerns (12) nach innen vorspringt,
**dadurch gekennzeichnet, dass** eine erste Kautschukschicht (13) auf der ersten Hauptfläche (14) angeordnet ist, dass eine zweite Kautschukschicht (15) auf der zweiten Hauptfläche (16) angeordnet ist, dass der innere ringförmige Teil (17) Kautschuk umfasst und dass der Innendurchmesser des inneren ringförmigen Teils (17) derart gewählt wird, dass das Dichtelement (4, 5) durch axiale Kompression lösbar am Bolzen (3) gehalten wird.

2. Hydraulische Kupplung (1) nach Anspruch 1,
**dadurch gekennzeichnet, dass**
die äußere Seitenfläche (20) des plastisch verformbaren Kerns (12) frei von Kautschuk bleibt.

3. Hydraulische Kupplung (1) nach Anspruch 1 oder Anspruch 2,
**dadurch gekennzeichnet, dass**
die innere Seitenfläche (20) des plastisch verformbaren Kerns (12), die an den inneren ringförmigen Teil (17) angrenzt, frei von Kautschuk bleibt.

4. Hydraulische Kupplung (1) nach Anspruch 1,
**dadurch gekennzeichnet, dass**
die äußere Seitenfläche (19) und die innere Seitenfläche (20) des plastisch verformbaren Kerns (12), die an den inneren ringförmigen Teil (17) angrenzt, eine Kautschukbeschichtung aufweisen.

5. Hydraulische Kupplung (1) nach einem der Ansprüche 1 bis 4,
**dadurch gekennzeichnet, dass**
der plastisch verformbare Kern (12) Kunststoff umfasst.

6. Hydraulische Kupplung (1) nach einem der Ansprüche 1 bis 4,
**dadurch gekennzeichnet, dass**
der plastisch verformbare Kern (12) ein Metall oder eine Legierung umfasst.

7. Hydraulische Kupplung (1) nach Anspruch 6,
**dadurch gekennzeichnet, dass**
der plastisch verformbare Kern (12) Stahl oder Aluminium umfasst.

8. Hydraulische Kupplung (1) nach einem der Ansprüche 1 bis 7,
**dadurch gekennzeichnet, dass**
der Kautschuk Fluorcarbonkautschuk ist.

9. Hydraulische Kupplung (1) nach einem der Ansprüche 1 bis 8,
**dadurch gekennzeichnet, dass** der Kautschuk Ethylen-Propylen-Dien-Monomer-Kautschuk oder hydrierter Nitril-Butadien-Kautschuk oder Nitril-Butadien-Kautschuk ist.

10. Hydraulische Kupplung (1) nach einem der Ansprüche 1 bis 9,
**dadurch gekennzeichnet, dass**
ein Dichtelement (4, 5) an gegenüberliegenden Seiten des Körpers (2) angeordnet ist.

11. Hydraulische Kupplung (1) nach einem der Ansprüche 1 bis 10,
**dadurch gekennzeichnet, dass**
die hydraulische Kupplung (1) eine hydraulische Kupplung vom Banjo-Typ ist.

## Revendications

1. Accouplement hydraulique (1) comprenant :
- un corps (2) comprenant une ouverture (6) qui s'étend à travers le corps (2) et un passage de fluide (7) qui est en intersection et en communication de fluide avec l'ouverture (6),
- un goujon (3) adapté pour être reçu dans l'ouverture (6) traversant le corps (2), lequel goujon (3) comprend une partie de base (9), un passage de fluide axial (10) dans la partie de base (9) ouvert à une extrémité et au moins un orifice de fluide radial (11) en communication de fluide avec le passage de fluide axial (10), dans lequel quand le goujon (3) est reçu dans l'ouverture (6) traversant le corps (2), l'orifice de fluide radial (11) du goujon (3) est en communication de fluide avec le passage de fluide (7) du corps (2),
- au moins un élément d'étanchéité annulaire (4, 5) adapté pour être disposé entre le goujon (3) et le corps (2), lequel élément d'étanchéité (4, 5) comprend une âme capable de déformation plastique (12) comprenant une première surface principale (14), une deuxième surface principale (16) opposée à la première surface principale (14) et une partie annulaire intérieure (17) dépassant vers l'intérieur depuis une face latérale intérieure (18) de l'âme capable de déformation plastique (12),
**caractérisé en ce qu'**une première couche de caoutchouc (13) est positionnée sur la première surface principale (14), une deuxième couche de caoutchouc (15) est positionnée sur la deuxième surface principale (16), la partie annulaire intérieure (17) comprend du caoutchouc et le diamètre intérieur de l'élément annulaire intérieur (17) est choisi de telle manière que l'élément d'étanchéité (4, 5) puisse être retenu de façon détachable sur le goujon (3) par une compression axiale.

2. Accouplement hydraulique (1) selon la revendication 1, **caractérisé en ce que** la face latérale extérieure (20) de l'âme capable de déformation plastique (12) reste dépourvue de caoutchouc.

3. Accouplement hydraulique (1) selon la revendication 1 ou 2, **caractérisé en ce que** la face latérale intérieure (20) de l'âme capable de déformation plastique (12) adjacente à la partie annulaire intérieure (17) reste dépourvue de caoutchouc.

4. Accouplement hydraulique (1) selon la revendication 1, **caractérisé en ce que** la face latérale extérieure (19) et la face latérale intérieure (20) de l'âme capable de déformation plastique (12) adjacentes à la partie annulaire intérieure (17) comprennent un revêtement en caoutchouc.

5. Accouplement hydraulique (1) selon l'une des revendications 1 à 4, **caractérisé en ce que** l'âme capable de déformation plastique (12) comprend du plastique.

6. Accouplement hydraulique (1) selon l'une des revendications 1 à 4, **caractérisé en ce que** l'âme capable de déformation plastique (12) comprend un métal ou un alliage.

7. Accouplement hydraulique (1) selon la revendication 6, **caractérisé en ce que** l'âme capable de déformation plastique (12) comprend de l'acier ou de l'aluminium.

8. Accouplement hydraulique (1) selon l'une des revendications 1 à 7, **caractérisé en ce que** le caoutchouc est un caoutchouc fluorocarboné.

9. Accouplement hydraulique (1) selon l'une des revendications 1 à 8, **caractérisé en ce que** le caoutchouc est du caoutchouc monomère d'éthylène-propylène-diène ou du caoutchouc nitrile-butadiène hydrogéné ou du caoutchouc nitrile-butadiène.

10. Accouplement hydraulique (1) selon l'une des revendications 1 à 9, **caractérisé en ce qu'**un élément d'étanchéité (4, 5) est disposé sur des côtés opposés du corps (2).

11. Accouplement hydraulique (1) selon l'une des revendications 1 à 10, **caractérisé en ce que** l'accouplement hydraulique (1) est un accouplement hydraulique de type banjo.
